# EUROPEAN PATENT APPLICATION

(11) **EP 1 326 446 A2**
(43) Date of publication of application: **09.07.2003**
(21) Application number: 02027629.1
(22) Date of filing: 11.12.2002
(51) Int. Cl.: H04N 7/16

(54) **Commercial distribution system, commercial processing apparatus, commercial processing method, and commercial processing program**

(30) Priority: 18.12.2001 JP 2001384178
(71) Applicant: Pioneer Corporation, Meguro-ku, Tokyo (JP)
(72) Inventor: Okajima, Takahiro, Tokorozawa Koujou, Tokorozawa-shi, Saitama-ken 359-8522 (JP); Bessho, Manabu, Tokorozawa Koujou, Tokorozawa-shi, Saitama-ken 359-8522 (JP); Komatsu, Kazuyoshi, Tokorozawa Koujou, Tokorozawa-shi, Saitama-ken 359-8522 (JP); Tsunoi, Tomoaki, Tokorozawa Koujou, Tokorozawa-shi, Saitama-ken 359-8522 (JP); Sakamoto, Shinichiro, Tokorozawa Koujou, Tokorozawa-shi, Saitama-ken 359-8522 (JP); Hashimoto, Hiroaki, Tokorozawa Koujou, Tokorozawa-shi, Saitama-ken 359-8522 (JP)
(74) Representative: Popp, Eugen, Dr.

(57) **Abstract**

A sponsor produces various commercials targeted to unspecified users. Each commercial data(Dcm) is attached with attachment data(ATR) indicating the sponsor's idea regarding user and distributed to a large number of unspecified users. A commercial processing apparatus (APR) on the user side compares pre-registered data(Drv) set beforehand by a user and the attachment data(ATR) in a commercial(CMA) being distributed and determines whether or not the commercial satisfies the user's needs. In response to the determination that the commercial satisfies the user's needs, the commercial based on the commercial data being distributed is shown and stored in a storage portion (MEM) as registered commercial data(Dcms). In response to the determination that the commercial does not satisfy the user's needs, instead of the commercial(Dcm) being distributed, a commercial (Dcms) based on registered commercial data already stored in a storage portion(MEM) is shown. Therefore, a commercial according to user's needs can be provided to the user.

## Description

### BACKGROUND OF THE INVENTION

The present invention relates to a commercial distribution system, a commercial processing apparatus, a commercial processing method and a commercial processing program to provide a commercial which satisfies each user's needs through a communication system such as a television network which distributes information to a large number of unspecified people.

In a so-called mass medium, a television broadcasting system for example, broadcast programs and commercials are distributed in a fixed, regular manner from the broadcasting station on the upstream side as a distribution source to a large number of unspecified users on the downstream side.

More specifically, the same program and the same commercial are provided in an undifferentiated manner to a large number of unspecified users which happen to select the same receiving channel at the same time.

Meanwhile, in the manner of information distribution in the conventional television broadcasting system described above, the concepts of commercials as intended by the sponsors are sometimes not easily conveyed to meet users' needs.

In a more specific example, when a sponsor distributes a commercial to a large number of unspecified users through a certain broadcasting station, all the people which select the channel of the station and receive at the moment are not always viewing/listening to the commercial with interest. In other words, some may find the commercial interesting while others may not.

Therefore, simply distributing a commercial might not convey what it is meant for by the sponsor to a lot of users, in other words, the commercial distribution might not be effective enough. Some users might not be able to view/listen to commercials which interest them very often.

### SUMMARY OF THE INVENTION

The present invention is directed to a solution to the above disadvantages, and it is an object of the present invention to provide a commercial distribution system, a commercial processing apparatus, and a commercial processing method which permit the concept of a commercial as intended by a sponsor to be presented according to each user's needs, and a commercial processing program enabling a computer to operate to permit the concept of a commercial intended by a sponsor to be provided according to needs of each user.

In order to achieve the above object, the commercial distribution system according to the present invention includes a distribution source for distributing a commercial to a large number of unspecified users, and a commercial processing apparatus for showing the commercial received from the distribution source. The distribution source distributes attachment information indicating a user as a distribution target together with the commercial. The commercial processing apparatus includes determining means for comparing the attachment information distributed together with the commercial and registered information indicating needs set before hand by a user, and for determining whether or not the commercial satisfies the user's needs based on how much the attachment information and the registered information agree with each other, and control means for showing a commercial being distributed and having the commercial stored in storage means as a registered commercial in response to the determination by the determining means that the commercial satisfies the user's needs, while showing a registered commercial already stored in the storage means instead of the commercial being distributed in response to the determination by the determining means that the commercial does not satisfy the user's needs.

According to the commercial distribution system described above, a commercial is distributed to a large number of unspecified users from the distribution source. When the determining means in the commercial processing apparatus provided on the receiving side determines that the commercial being distributed satisfies the user's needs, the control means shows the commercial being distributed and also stores the commercial in the storage means. Meanwhile, when the determining means determines that the commercial being distributed does not satisfy the user's needs, the control means shows a registered commercial already stored in the storage means.

Therefore, when a commercial being distributed does not satisfy user's needs, a registered commercial already stored in the storage means which satisfies the user's needs is shown instead, so that a commercial which satisfy the user's needs can more often be provided.

In order to achieve the above object, the commercial processing apparatus according to the present invention receives and shows a commercial distributed to a large number of unspecified users as a target from a distribution source. The apparatus includes determining means for comparing attachment information distributed together with the commercial from the distribution source which indicates a user as a distribution target and registered information indicating needs set beforehand by a user, and for determining whether or not the commercial satisfies the user's needs based on how much the attachment information and the registered information agree with each other, and control means for showing the commercial being distributed and having the commercial stored in storage means as a registered commercial in response to the determination by the determining means that the commercial satisfies the user's needs, while showing a registered commercial already stored in the storage means instead of the commercial being distributed in response to the determination by the determining means that the commercial does not satisfy the user's needs.

By the commercial processing apparatus according to the present invention as described above, when a commercial is distributed to a large number of unspecified users from a distribution source, the determining means in the commercial processing apparatus determines whether or not the commercial being distributed satisfies the user's needs. When it is determined that the commercial being distributed satisfies the user's needs, the control means shows the commercial and stores the commercial in the storage means. Meanwhile, when the determining means determines that the commercial being distributed does not satisfy the user's needs, the control means shows a commercial based on a registered commercial already stored in the storage means.

Therefore, when the commercial being distributed does not satisfy the user's needs, a registered commercial which satisfies the user's needs stored in the storage means is shown instead, so that a commercial which satisfies the user's needs can more often be provided.

In the commercial distribution system and the commercial processing apparatus described above, a registered commercial is stored in the storage means in association with the sponsor of the commercial being distributed, while when a registered commercial already stored in the storage means is shown, a registered commercial by the sponsor of the commercial being distributed is shown.

By the commercial distribution system and the commercial processing apparatus as described above, when a commercial being distributed does not satisfy the user's needs, a registered commercial stored in the storage means corresponding to the sponsor of the commercial being distributed is selected and shown. More specifically, a registered commercial by the sponsor of the commercial being distributed is shown rather than a commercial by another different sponsor, in order not to give the sponsor disadvantage.

In the commercial distribution system and the commercial processing apparatus as described above, when a registered commercial already stored in the storage means is shown, a registered commercial with a high priority set based on an instruction from the user is shown.

By the commercial distribution system and the commercial processing apparatus as described above, when a commercial being distributed does not satisfy the user's needs and a registered commercial stored in the storage means is selected and shown instead, a registered commercial with a high priority set beforehand by the user is shown, so that a commercial which satisfies the user's needs better is shown.

In the commercial distribution system and the commercial processing apparatus as described above, when a registered commercial already stored in the storage means is shown, a registered commercial with a high priority set beforehand by the sponsor is shown.

By the commercial distribution system and the commercial processing apparatus as described above, when a commercial being distributed does not satisfy the user's needs and a registered commercial stored in the storage means is selected and shown instead, a registered commercial with a high priority set beforehand by the sponsor is shown. In this way, a commercial the sponsor desires the user to watch with a priority can be set, so that the commercial distribution effect can be improved.

According to the communication means of the commercial distribution system and the commercial processing apparatus as described above, information indicating how a registered commercial stored in the storage means for each sponsor is viewed/listened to is transmitted to the sponsor through a communication network.

By the commercial distribution system and the commercial processing apparatus as described above, information indicating how a commercial is viewed/listened to for each sponsor is provided to the sponsor. In this way, useful information in producing commercials in the future can be provided to each sponsor.

In order to achieve the above object, in a commercial processing method according to the present invention, a commercial from a distribution source is distributed to a large number of unspecified users and a commercial is shown according to needs of each user. The method includes the steps of comparing attachment information distributed together with a commercial from the distribution source which indicates a user as a distribution target and registered information indicating needs set beforehand by a user, and determining whether or not the commercial satisfies the user's needs based on how much the attachment information and the registered information agree with each other, and showing the commercial being distributed and having the commercial stored in storage means as a registered commercial in response to the determination that the commercial satisfies the user's needs, while showing a registered commercial already stored in the storage means instead of the commercial being distributed in response to the determination that the commercial does not satisfy the user's needs.

A registered commercial is stored in the storage means in association with the sponsor of a commercial being distributed, and when a registered commercial already stored in the storage means is shown, a registered commercial by the sponsor of the commercial being distributed is shown.

When a registered commercial stored in the storage means is shown, a registered commercial with a high priority set based on an instruction from the user is shown.

When a registered commercial already stored in the storage means is shown, a registered commercial with a high priority set beforehand by the sponsor is shown.

Information indicating how a commercial registered in the storage means is viewed/listened to for each sponsor is transmitted through a communication network to the sponsor.

In the commercial processing method according to the present invention, when a commercial being distributed does not satisfy the user's needs, a registered commercial stored in the storage means corresponding to the sponsor of the commercial being distributed is selected and shown.

When a commercial being distributed does not satisfy the needs of the commercial, and a registered commercial stored in the storage means is selected and shown instead, a registered commercial stored in the storage means corresponding to the sponsor of the commercial being distributed is shown, which can never be disadvantageous to the sponsor.

A registered commercial with a high priority set beforehand by the user or set beforehand by the sponsor is shown, so that the commercial which satisfies the user's needs can be provided, and for the sponsor the commercial distribution effect can be improved.

Information indicating how a commercial is viewed/listened to for each sponsor is transmitted to the sponsor. In this way, information useful in producing commercials in the future can be provided to the sponsor.

In order to achieve the above object, a commercial processing program according to the present invention, which is stored in the computer readable storage means, controls a computer to show a commercial distributed from a distribution source to a large number of unspecified users as a target according to needs of each user. The program enables the computer to execute the process including the steps of comparing attachment information distributed together with the commercial from the distribution source which indicates a user as a distribution target and registered information indicating needs set beforehand by a user, and determining whether or not the commercial satisfies the user's needs based on how much the attachment information and the registered information agree with each other and a control step of carrying out control such that a commercial being distributed is shown and also stored in storage means as a registered commercial in response to the determination that the commercial satisfies the user's needs, while a registered commercial already stored in the storage means is shown instead of the commercial being distributed in response to the determination that the commercial does not satisfy the user's needs.

In the control step of storing the registered commercial described above, the registered commercial is stored in association with the sponsor of the commercial being distributed, and a registered commercial stored in the storage means corresponding to the sponsor of the commercial being distributed is shown.

In the control step of showing a registered commercial already stored in the storage means as described above, a registered commercial stored in the storage means with a high priority set based on an instruction from the user is shown.

In the control step of showing a registered commercial already stored in the storage means as described above, a registered commercial stored in the storage means with a high priority set beforehand by the sponsor is shown.

The commercial processing program has a communication step, in which information indicating how a registered commercial stored in the storage means for each sponsor is viewed/listened to is transmitted to the sponsor through a communication network.

The commercial processing program according to the present invention controls a computer to execute a processing for showing a commercial being distributed.

When the commercial being distributed does not satisfy the user's needs, a registered commercial stored in the storage means corresponding to the sponsor of the commercial being distributed is selected and shown.

When the commercial being distributed does not satisfy the user's needs and a registered commercial stored in the storage means is selected and shown instead, a registered commercial stored in the storage means corresponding to the sponsor of the commercial being distributed is shown, which can never be disadvantageous to the sponsor.

A registered commercial with a high priority set beforehand by the user or by the sponsor is shown, so that the commercial which satisfies the user's needs more is provided to the user and the effect of commercial distribution for the sponsor can be improved as the sponsor expects.

The information indicating how a commercial by each sponsor is viewed/listened to is provided to the sponsor, so that useful information in producing commercials in the future can be provided to each sponsor.

### BRIEF DESCRIPTION OF THE DRAWINGS

These and other objects and advantages of the present invention will become clear from the following description with reference to the accompanying drawings, wherein:
Fig. 1 is a block diagram of the configuration of a commercial distribution system according to an embodiment of the invention;
Figs. 2A to 2C show how the commercial distribution system operates;
Fig. 3 is a block diagram of the configuration of a commercial processing apparatus according to the embodiment;
Fig. 4 shows registered commercial data and registered attachment data stored in the storage portion of the commercial processing apparatus and a managing method thereof;
Fig. 5 is a flowchart for use in illustration of the operation of the commercial processing apparatus, particularly the operation of storing registered data in the storage portion;
Fig. 6 is a flowchart for use in illustration of the operation of the commercial processing apparatus according to the embodiment, particularly the operation of showing a commercial; and
Fig. 7 is a flowchart for use in further illustration of the operation of showing a commercial.

### DETAILED DESCRIPTION OF THE PREFERRED EMBODIMENTS

An embodiment of the present invention will now be described in conjunction with the accompanying drawings. Note that as a preferred embodiment, a commercial distribution system, a commercial processing apparatus, a commercial processing method, and a commercial processing program each for distributing information to users through a digital television network will be described.

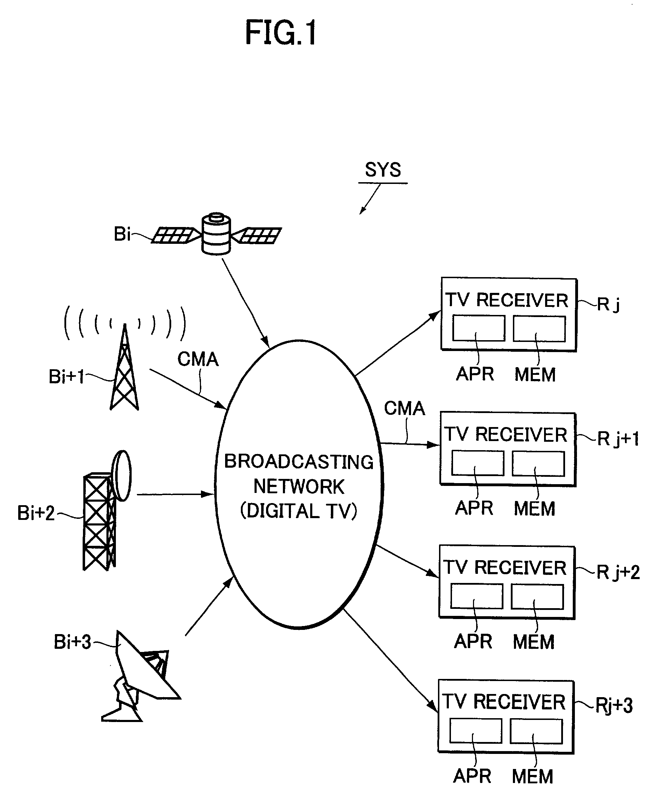

Fig. 1 is a diagram of the basic configuration of a commercial distribution system SYS according to the embodiment.

In the commercial distribution system SYS, television broadcasting distributed through a wireless or wire broadcasting network from a plurality of broadcasting stations Bi, Bi+1, Bi+2, Bi+3, ... is received by television receivers Rj, Rj+1, Rj+2, Rj+3, ... owned by a large number of unspecified users.

The television receivers are each provided with a commercial processing apparatus APR having a storage portion MEM.

Broadcasting stations transmit television broadcasting waves by dedicated channel numbers (dedicated transmission bands) allocated to them based on the digital multi-channel television broadcasting standards, and each user switchably selects a desired channel number at the television receiver and receives broadcasting from a desired broadcasting station.

The broadcasting stations distribute so-called contents programs such as dramas, news, and movies as well as commercials presented by sponsors.

Now, when a certain broadcasting station (Bi+1 for example) distributes a commercial CMA by a sponsor A, attachment data Dtg called main target information is attached to image data and audio data Dcm forming the commercial CMA (hereinafter simply referred to as the "commercial data Dcm").

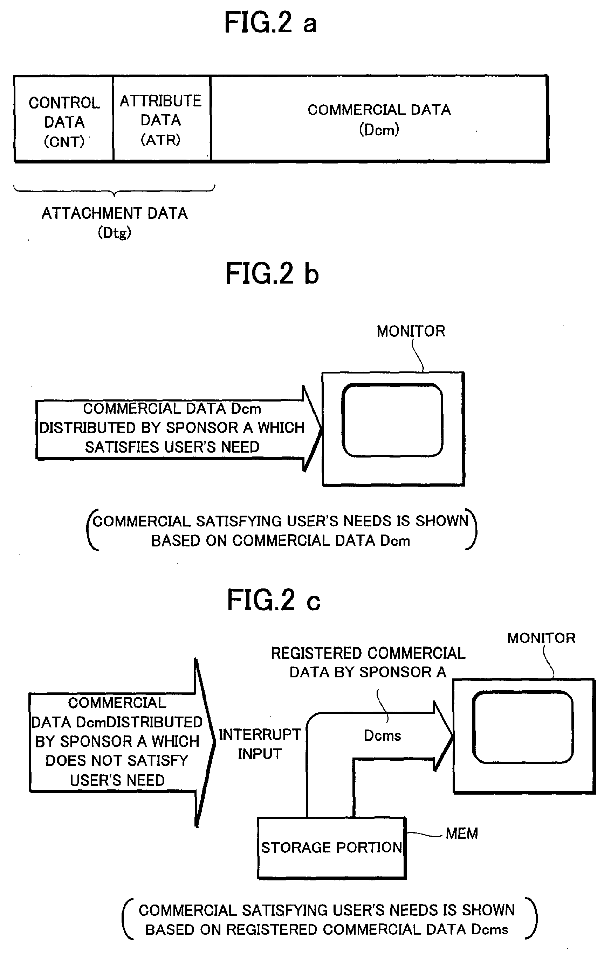

As shown in Fig. 2A, the attachment data Dtg includes control data CNT and attribute data ATR, and is attached at, for example, the header part of the commercial data Dcm for distribution.

The control data CNT includes item data used to control the commercial. The item data includes data about the name of the sponsor A (such as the name of the company), the name of an item related to the commercial (such as a trade mark), an ID number (such as a production number) attached to the commercial, the air time for the commercial (such as 15 seconds or 30 seconds), the date and time of distribution of the commercial, the period of validity for the commercial (for example December 31, 2001), and a priority.

The item data called "priority" is attached as an indicator for the degree of importance of each commercial when a plurality of commercials are produced and distributed by the sponsor A. For example, the commercial believed to be the most important by the sponsor A is attached with an index "most important," and then the next important commercial is attached with an index "important." In this way, the degree of importance intended by the sponsor A is indicated.

The attribute data ATR includes item data used to assume a user based on the age, sex, occupation, hobbies and the like.

Therefore, the attribute data ATR is used to identify users which fall under unspecified item data categories such as age, sex, occupation and hobbies as described above as a potential distribution target intended by the sponsor A. For the users, the data verifies that the received commercial data Dcm satisfies the user's needs assumed by the sponsor A.

Note, however, that the attribute data ATR does not include private information to directly specify the user such as the user's name, his/her bank account number or his/her telephone number but includes information in general categories such as age, sex, occupation and hobbies.

Commercial data Dcm from the sponsor A produced and reviewed in consideration of users which fall under the attribute data ATR is attached with the attachment data Dtg and distributed. In this way, commercials which satisfy the user's needs assumed by the sponsor A are provided.

Note, however, that the attribute data ATR is related to nothing more than the sponsor A's idea of users, and simply distributing the attachment data Dtg including the attribute data ATR is not equal to distributing a commercial as if sending direct mail to particular targeted users. The broadcasting station basically indiscriminately distributes commercials to a lot of unspecified users.

When the commercial CMA is thus distributed and received by a television receiver on the user side (Rj+1 for example), the commercial processing apparatus APR in the television receiver compares previously registered data Drv in the device APR and the content of the attachment data Dtg, and determines whether the commercial satisfies the needs of the user.

The pre-registered data Drv includes item data such as the age, sex, occupation, and hobbies of the user similarly to the attribute data ATR described above. The user previously registers these kinds of data as basic information for suggesting commercials to his/her taste in the commercial processing apparatus APR.

More specifically, using the commercial distribution system SYS according to the embodiment, information items in general categories such as age, sex, occupation, hobbies and other unspecified kinds of information items are listed for standardization in the industry associated with commercial distribution such as sponsors and broadcasting stations. Then, items corresponding to a user assumed by each sponsor are selected from the standardized item list and distributed as the attribute data ATR.

Meanwhile, data in the already standardized item list is stored in the commercial processing apparatus APR on the user side also. The user operates the operation portion (such as a remote controller) provided in the commercial processing apparatus APR, and selects a desired item from the standardized item list, and indicates a commercial which satisfies his/her needs.

The commercial processing apparatus APR compares the attachment data Dtg and the pre-registered data Drv. When the apparatus determines, based on the result, that the item data of the attachment data Dtg and the item data of the pre-registered data Drv are the same or similar, the commercial is determined to meet the needs of the user, and the commercial data Dcm being distributed is shown, or televised on the monitor screen of the television receiver.

More specifically, as shown in Fig. 2B, when the commercial distributed by the sponsor A satisfies the needs of the user who has the TV receiver Rj+1, the commercial processing apparatus APR supplies the distributed commercial data Dcm to the monitor, so that the commercial of the sponsor A is shown on the screen.

Furthermore, when the commercial processing apparatus APR compares the attachment data Dtg and the pre-registered data Drv, and determines that the commercial satisfies the needs of the user based on the result and also that the commercial is received for the first time, the commercial data Dcm and the attachment data Dtg are stored in the storage portion MEM.

More specifically, when a commercial which satisfies the needs of the user is received, and the commercial processing device APR determines that the commercial is new and received for the first time, the commercial data Dcm is stored in the storage portion MEM as registered commercial data Dcms. Then, the attachment data Dtg is stored as registered attachment data Dtgs in the storage portion MEM in association with the registered commercial data Dcms.

The registered commercial data Dcms and the registered attachment data Dtgs are stored in the storage portion MEM in association with one another, so that commercials stored in the storage portion MEM can be categorized on a sponsor-basis and searched.

When the commercial processing apparatus APR compares the attachment data Dtg and the pre-registered data Drv, and determines that the commercial does not satisfy the needs of the user, appropriate data (which satisfies the needs) is selected from one or more registered commercial data pieces Dcms already stored in the storage portion MEM.

Note that the registered commercial data Dcms can be searched and selected only within the range of commercials by the sponsor of the commercial currently being distributed. Even if commercials of another sponsor are stored in the storage portion MEM, registered commercial data Dcms belonging to only the sponsor of the commercial being distributed is searched and selected.

More specifically, as shown in Fig. 2C, when a commercial by a sponsor A is received, and it is determined that the commercial does not satisfy the needs of the user, input of the commercial data Dcm currently being received is interrupted, and the registered commercial data Dcms by the same sponsor A is searched in the storage portion MEM instead of that.

Registered attachment data Dtgs having a content the same as or similar to the received attachment data Dtg is searched, and registered commercial data Dcms associated with the found registered attachment data Dtgs is selected. In this way, a suitable commercial by the sponsor A whose commercial is being distributed can be searched in the storage portion MEM.

During the distribution of the commercial by the sponsor A (i.e., the commercial air time by the sponsor A) , a commercial based on the registered commercial data Dcms found by the searching is shown on the monitor screen of the television receiver.

Therefore, when the certain sponsor A distributes a commercial which does not satisfy the needs of a user B, a commercial based on registered commercial data Dcms by the same sponsor A stored in the storage portion MEM of the user B is shown instead of the currently distributed commercial during the commercial air time by the sponsor A.

In this way, according to the commercial distribution system SYS, sponsors produce a variety of commercials targeted to unspecified users, and attachment data Dtg indicating a sponsor's idea of a potential user is attached to each commercial data Dcm. Then these data pieces are appropriately distributed, and the commercial processing apparatus APR provided on the user side shows a commercial currently being received which is adapted to the pre-registered data Drv (satisfying the needs of the user). When a commercial not adapted to the pre-registered data Drv (not satisfying the needs of the user) is received, another commercial satisfying the needs of the user is automatically shown using the registered commercial data Dcms.

Therefore, when a commercial of some sponsor is distributed under this system SYS, the sponsor can have users view/listen to a commercial which interests her/him among several commercials already distributed. Particularly when the commercial distributed at the time does not meet the diverse taste of the user, any of the commercials stored in the storage portion MEM which may interest the user can always be presented to the user during the commercial air time.

Therefore, the possibility of distributing commercials which do not satisfy the needs of users can significantly be reduced. Stated differently, the number of users who might view/listen to the commercials with interest can significantly be increased, so that the commercial distribution effect can be improved.

In addition, when a commercial currently being distributed does not satisfy the needs of the user, another commercial by that particular sponsor rather than one by any other sponsor is shown based on registered commercial data Dcms for the sponsor whose commercial is being distributed at the time. Therefore, the system can never be disadvantageous to the sponsors distributing the commercial.

Meanwhile, the user can watch a commercial interesting him/her more often than other commercials by the same sponsor. When the latest commercial by a sponsor is shown and interests the user, the commercial is stored in the storage portion MEM, so that newer and more interesting commercials can be viewed/listened to more often.

Moreover, the basic configuration of the commercial distribution system SYS is described above, while the system will now be more detailed in connection with the configuration and operation of the commercial processing apparatus APR.

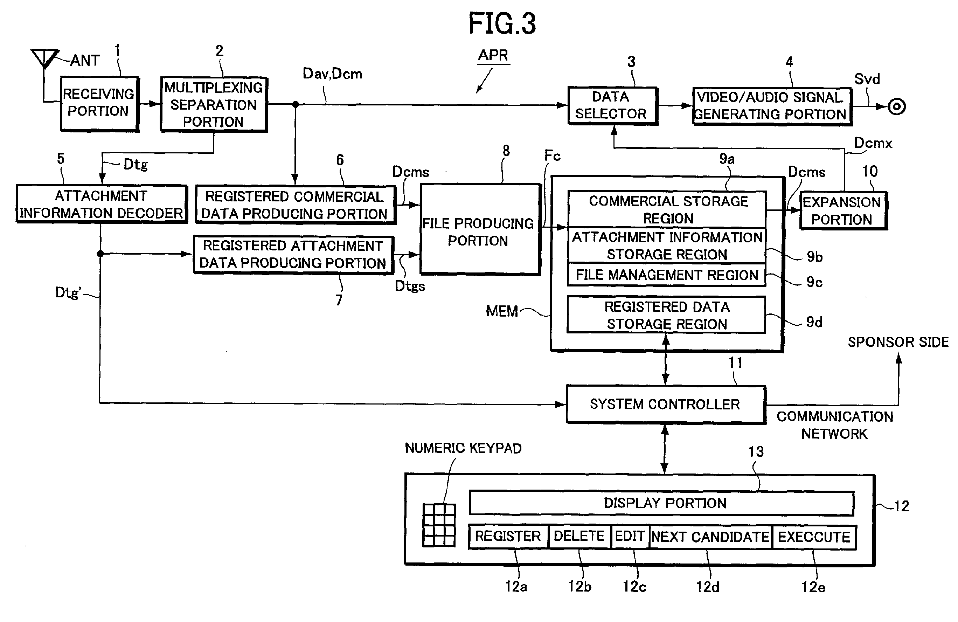

Now, with reference to the block diagram in Fig. 3, the configuration of the commercial processing apparatus APR will now be described. Note that the commercial processing apparatus APR is provided as one element of a television receiver as described above. The apparatus uses basic elements of the television receiver such as a receiving portion 1 receiving incoming electric waves from broadcasting stations, and video/audio signal generating portion 4 supplying the monitor and speaker (not shown) with video and audio signals for reproduction.

In Fig. 3, an incoming electric wave (broadcasting wave) through a broadcasting network as described above is received by a receiving antenna ANT, and a high frequency signal obtained by the reception is RF-demodulated by the receiving portion 1, so that the signal is converted into digital multi-channel television data in a frequency band which can be subjected to signal processing. The resulting signal is then supplied to a multiplexing separation portion 2.

Meanwhile, though not shown in the drawings, when a broadcasting wave from a broadcasting station is received by a wire transmission path such as an optical fiber and a coaxial cable, the receiving portion 1 connected to such a wire transmission path converts the signal into digital multi-channel television data for supply to the multiplexing separation portion 2.

The multiplexing separation portion 2 separates and extracts attachment data Dtg included in the digital multi-channel television data, commercial data Dcm and contents data Dav (i.e., the data of the program to be broadcast as described). Then, the portion 2 outputs the attachment data Dtg to an attachment information decoder 5, the contents data Dav and the commercial data Dcm to a data selector 3 and a registered commercial data producing portion 6, respectively.

The multiplexing separation portion 2 switchably selects the channel of a broadcasting station desired by a user in response to an instruction from a system controller 11 which will be described, and carries out the above separation/extraction processing to the digital multi-channel television data of the selected channel.

Moreover, a channel switch key (not shown) for switchably selecting a station desired by the user is provided at an operation portion 12, and the system controller 11 carries out the switching selection in response to the channel switch key turned on by the user.

The data selector 3 is made of a multiplexer or a mechanical switch which switches in response to an instruction from the system controller 11.

When there is an instruction issued from the system controller 11 to show, or televise contents data Dav, the data selector 3 transfers the contents data Dav supplied from the multiplexing separation portion 2 to the video/audio signal generating portion 4, so that the program is shown.

When there is an instruction issued from the system controller 11 to show a commercial based on commercial data Dcm currently being received, the data selector 3 transfers the commercial data Dcm supplied from the multiplexing separation portion 2 to the video/audio signal generating portion 4, so that the commercial is broadcast.

When there is an instruction issued from the system controller 11 to show a commercial based on registered commercial data Dcms stored in the storage portion MEM described above, the data selector 3 transfers the registered commercial data Dcms supplied from the storage portion MEM to the video/audio signal generating portion 4 through an expansion portion 10, so that the commercial based on the registered commercial data Dcms is shown.

Note that the expansion portion 10 expands the registered commercial data Dcms (which is compressed by a prescribed data compression method) stored in the storage portion MEM by an expansion method corresponding to the compression, and the registered commercial data Dcmx after the expansion is output to the data selector 3.

When there is an instruction issued from the system controller 11 to show a commercial based on the registered commercial data Dcms stored in the storage portion MEM during broadcasting a contents (i.e., broadcast program), the data selector 3 transfers to the video/audio signal generating portion 4 contents data Dav supplied from the multiplexing separation portion 2 and the registered commercial data Dcmx after the expansion output from the storage portion MEM and supplied through the expansion portion 10. In this way, the broadcast program by the contents data Dav and the commercial by the registered commercial data Dcmx are both displayed on the monitor screen at the same time. In other words, a so-called multi-angle display method is carried out.

When the contents data Dav, the commercial data Dcm and the registered commercial data Dcmx are supplied in response to an instruction from the system controller 11, the video/audio signal generating portion 4 converts these data pieces into a reproduction signal Svd such as a composite signal and a digital video signal.

Therefore, when the contents data Dav is supplied through the data selector 3, the reproduction signal Svd is supplied to the monitor and the speaker, so that the broadcast program being received is shown. When the commercial data Dcm is supplied through the data selector 3, the commercial being received is shown using the reproduction signal Svd.

When the registered commercial data Dcmx after expansion is supplied from the storage portion MEM to the video/audio signal generating portion 4, a commercial is shown by the reproduction signal Svd generated based on the registered commercial data Dcmx instead of the commercial data Dcm being received.

When the contents data Dav being received and the registered commercial data Dcmx from the storage portion MEM are supplied to the video/audio signal generating portion 4, the broadcast program and the commercial are shown at the same time using the reproduction signal Svd by the multi-angle display method.

In response to an instruction from the system controller 11, the attachment information decoder 5 demodulates attachment data Dtg being received and supplies the demodulated attachment data Dtg' to a registered attachment data producing portion 7 and also back to the system controller 11.

More specifically, the attachment data Dtg is modulated by a modulation method according to the standards set on the broadcasting station. The attachment information decoder 5 demodulates the data according to a demodulation method based on the standards, and the demodulated attachment data Dtg' is output.

The registered commercial data producing portion 6 compresses the commercial data Dcm being received according to a predetermined data compression method by the commercial processing apparatus APR in response to an instruction from the system controller 11. The compressed data is output to a file producing portion 8 as registered commercial data Dcms as described above.

Note that the registered commercial data producing portion 6 obtains and compresses the commercial data Dcm in response to an instruction from the system controller 11 to store the commercial currently being received.

In addition, the registered commercial data producing portion 6 has a buffer memory (not shown) having a storage capacity large enough to store the commercial data Dcm about at least for 15 seconds or 30 seconds corresponding to a normal commercial air time. The commercial data Dcm is temporarily stored in its entirety in the buffer memory, and the commercial data Dcms after the compression is output.

The attachment data producing portion 7 compresses the attachment data Dtg according to a predetermined data compressing method by the commercial processing apparatus APR in response to an instruction from the system controller 11 to store the commercial. The compressed attachment data is then supplied to the file producing portion 8 as registered attachment data Dtgs.

Note that the registered attachment data producing portion 7 also has a buffer memory which temporarily stores the attachment data Dtg in its entirety, and the registered attachment data Dtgs after the compression is output.

In response to an instruction from the system controller 11 to store the commercial, the file producing portion 8 produces a registered commercial file Fc for supply and storage in the storage portion MEM. The file Fc includes the registered commercial data Dcms produced by the registered commercial data producing portion 6 and the registered attachment data Dtgs produced by the registered attachment data producing portion 7 in association with one another.

Here, the file producing portion 8 produces a registered commercial file Fc to identify the sponsor based on the name of the sponsor, the name of the product related to the commercial, the ID number attached to the commercial and the like included in the control data CNT in the attachment data Dtg, so that such files can be sorted every sponsor.

In response to an instruction from the system controller 11 to store the commercial, the registered commercial data producing portion 6, the registered attachment data producing portion 7 and the file producing portion 8 produce registered attachment data Dtgs and registered commercial data Dcms based on the attachment data Dtg, and the commercial data Dcm shown in Fig. 2A, and a registered commercial file Fc, respectively for each sponsor for storage in the storage portion MEM.

The storage portion MEM includes a mass storage medium such as a semiconductor memory, a hard disc (HD), and a writable DVD (Digital Versatile Disc). The mass storage medium forms a commercial storage region 9a and an attachment information storage region 9b for storing registered commercial data Dcms and registered attachment data Dtgs in a registered commercial file Fc, a file management region 9c for storing file management data for managing these data pieces Dcms and Dtgs on a sponsor-basis, and a registered data storage region 9d for storing pre-registered data Drv being set beforehand by the user as described above.

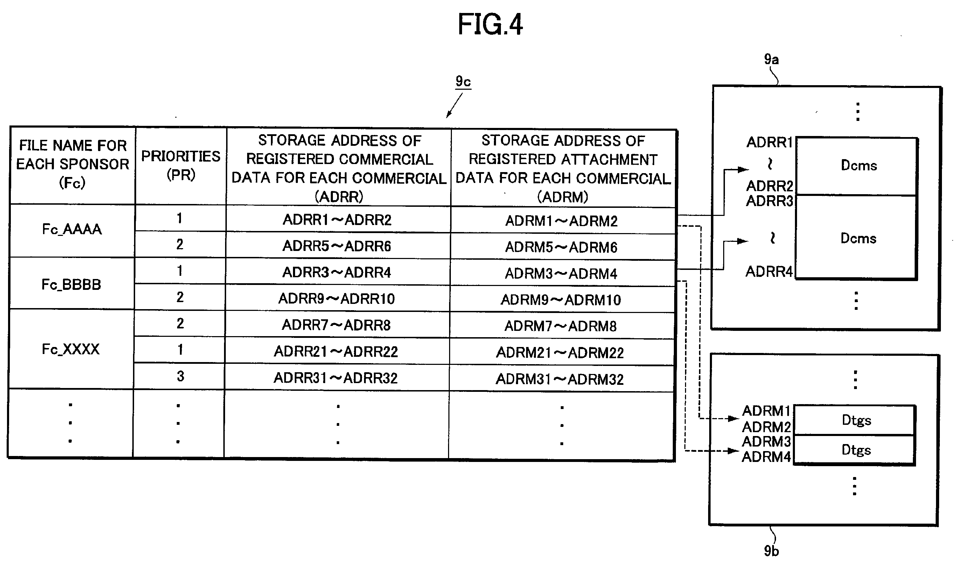

Fig. 4 shows an algorithm for managing the registered commercial data Dcms and the registered attachment data Dtgs using the file management data.

In Fig. 4, the file management region 9c stores the storage address (ADRR) of at least one registered commercial data piece Dcms stored in the commercial storage region 9a and the storage address (ADRM) of at least one registered attachment data piece Dtgs stored in the attachment information storage region 9b in association with each commercial.

In addition, the storage address (ADRR) of the registered commercial data Dcms and the storage address (ADRM) of the registered attachment data Dtgs, both associated with each commercial, are managed on a file-basis by the file name (Fc) of each sponsor identified by the registered commercial file Fc.

Therefore, if, for example, the file name Fc_AAAA of a sponsor shown in Fig. 4 is refereed to by the system controller 11, the storage addresses ADRR of the registered commercial data pieces Dcms and the storage addresses ADRM of the registered attachment data pieces Dtgs can be obtained in association with the sponsor. In this way, when the commercial storage region 9a and the attachment information storage region 9b are accessed using these storage addresses ADRR and ADRM, the registered commercial data Dcms and the registered attachment data Dtgs in association with the sponsor can be searched.

Meanwhile, in the example shown in Fig. 4, there are two commercials by the sponsor whose file name is Fc_AAAA, and when the storage regions (ADRR1 to ADRR2) are accessed in the memory, the registered commercial data Dcms of the first commercial can be searched. When the storage regions (ADRM1 to ADRM2) are accessed in the memory, the registered attachment data Dtgs of the first commercial can be searched.

Furthermore, the registered commercial data pieces Dcms for each sponsor are attached with data indicating priorities (PR). More specifically, when at least two registered commercial data pieces Dcms of the same sponsor are stored, the registered commercial data Dcms most adapted to the needs of the user for the sponsor is provided with the highest priority (PR=1), and the other registered commercial data pieces Dcms are also provided with the priorities based on the needs.

Note that as will be described in connection with the operation, when any commercial which does not satisfy the needs of the user is distributed, the system controller 11 selects an appropriate one based on the priorities among a plurality of registered commercial data pieces Dcms in association with the sponsor of the commercial. Then, the selected registered commercial data Dcms is expanded at the expansion portion 10 into registered commercial data Dcmx for supply to the video/audio signal generating portion 4 through the data selector 3. In this way, a commercial more adapted to the needs of the user can be shown.

The registered data storage region 9d stores as a database various kinds of item data including age, sex, occupation, and hobbies which are standardized by corporations such as sponsors and broadcasting stations in the industry.

Moreover, the standardized item data is regularly distributed via television broadcasting waves from the broadcasting stations. The item data is separated and extracted by the multiplexing separation portion 2. The system controller 11 has the data stored in the registered data storage region 9d.

Therefore, when the standardized item data is increased/reduced or changed, the newest item data can be stored as a database in the registered data storage region 9d.

The user operates the operation portion 12 and specifies one or more item data pieces imagining a commercial which may meet his/her taste from the item data list, and then the item data specified by the user is extracted and registered as pre-registered data Drv in response to an instruction from the system controller 11.

The system controller 11 includes a microprocessor (MPU) having functions such as operation, determination and control. The microprocessor (MPU) executes predetermined system programs which is stored beforehand, so that the elements of multiplexing separation portion 2 and the expansion portion 10 described above can be controlled. In addition, the controller controls the operation of the commercial processing apparatus APR as a whole in a centralized manner.

The system controller 11 is connected with an operation portion 12 having operation keys as those generally provided at a television receiver such as channel switch keys for selecting a receiving channel and an operation key for volume control.

The operation portion 12 is provided with operation keys special to the embodiment. They are a numeric keypad used to specify items etc. which satisfy the needs of the user, a registration key 12a, a deletion key 12b, an editing key 12c, a next candidate key 12d, and an execution key 12e. There is further provided a display portion 13 made of a liquid crystal display.

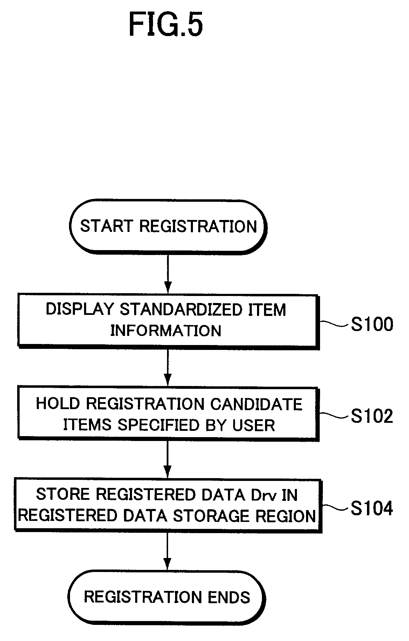

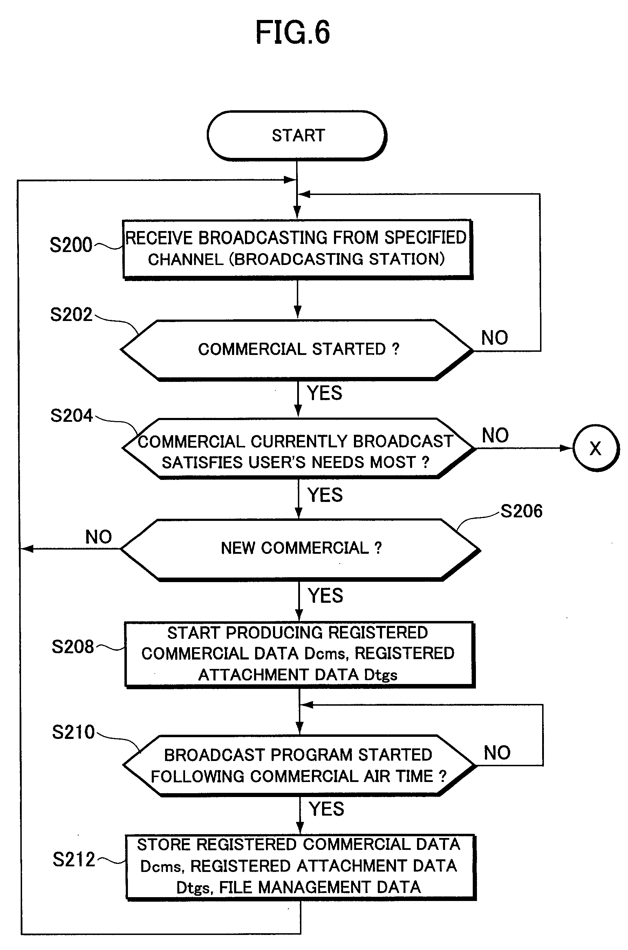

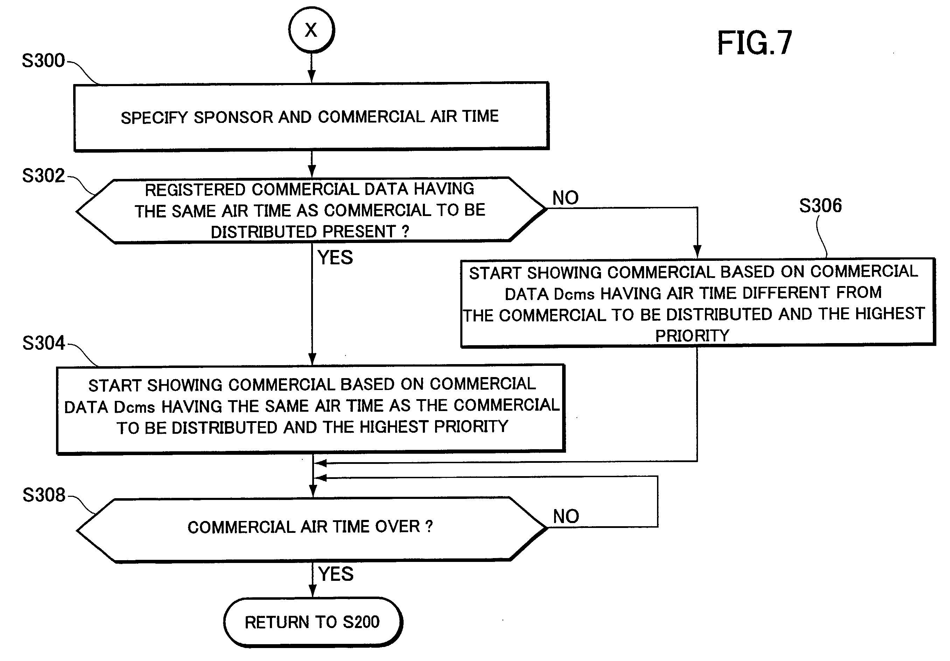

Referring to the flowcharts in Figs. 5 to 7, the operation of the commercial processing apparatus APR will now be described. Note that Fig. 5 is a flowchart showing the operation of storing pre-registered data Drv in the registered data storage region 9d. Figs. 6 and 7 are flowcharts for use in illustration of the operation of showing a commercial.

Referring to Fig. 5, first, the operation of storing pre-registered data Drv in the registered data storage region 9d will now be described.

When the main power supply of a television receiver is turned on, and the user turns on the registration key 12a provided at the operation portion 12, the system controller 11 detects the turning-on operation, and starts registration processing for reservation to produce and store pre-registered data Drv. Further, when the user turns on the registration key 12a while he/she views/listens to a program of a desired broadcasting station, the registration processing is started.

When the registration processing is started, in step S100, the system controller 11 reads out the standardized item data such as age and sex from the registered data storage region 9d, and attaches a number to each item for display at the display portion 13. Then, the system controller 11 waits for an instruction from the user.

Then in step S102, the user operates the numeric keypad provided at the operation portion 12 while viewing the content given at the display portion 13, and specifies a desired item by the number. Then, the system controller 11 temporarily holds the specified item data as a candidate for registration.

After the user specifies the desired item, the deletion key 12b may be turned on. Then, the system controller 11 clears (initializes) item data for registration candidates held until that moment and indicates that the user must start the operation from the beginning again. When a desired item is again specified using the numeric keypad, the specified item data is temporarily held as a registration candidate.

In this way, the user specifies a desired item using the numeric keypad or the deletion key 12b, and finally turns on the execution key 12e. Then in step S104 the item data held by the system controller 11 as a registration candidate is stored in the registration data region 9d as pre-registration data Drv, and the registration processing for reservation ends.

In this way, the user operates the numeric keypad and the deletion key 12b as desired, so that the items desired by the user can surely be input. Then, when the user finally turns on the execution key 12e, the items which satisfy the needs of the user can be pre-registered as registered items. More specifically, the user specifies his/her age, sex, occupation, hobbies and the like from the list of standardized items, so that the system controller 11 can automatically select a commercial which satisfies the needs of the user from the distributed commercials.

Referring to Figs. 6 and 7 , the operation of showing a commercial will now be described.

As soon as the registration processing described in conjunction with Fig. 5 ends, the processing shown in Fig. 6 is started.

In step S200, the broadcasting from the station selected by the user continues to be received, and in step S202, the system controller 11 determines whether the program is switched to a commercial as the receiving state continues. Until the program is switched to a commercial, the processing from step S200 is repeated. Once it is determined that the program is switched to the commercial, the control proceeds to step S204.

Here, the attachment data Dtg shown in Fig. 2A is newly received, and the demodulated attachment data Dtg' is supplied to the system controller 11 from the attachment information decoder 5. Then, the system controller 11 determines that the commercial air time has started, and proceeds to step S204.

In step S204, the system controller 11 determines whether or not the commercial currently being shown satisfies the needs of the user most among the commercials including that commercial being shown and the registered commercials by the same sponsor in the commercial storage region 9a.

More specifically, the system controller 11 obtains attribute data ATR included in the attachment data Dtg', and compares the attribute data ATR and the pre-registered data Drv stored in the registration data storage region 9d. When one or more item data pieces assumed by the sponsor included in the attribute data ATR and one or more registration item data pieces included in the pre-registered data Drv (hereinafter simply as the "registration item data") are completely matched, the commercial is determined to satisfy the needs of the user most.

When the number of matched data pieces among the item data pieces included in the attribute data ATR and the pre-registered data Drv is equal to or more than a prescribed ratio to the number of registered item data pieces included in the registered data Drv, the commercial is determined to satisfy the needs of the user most.

More specifically, assume that the number of the matched data pieces among the item data pieces included in the attribute data ATR and the registered item data pieces included in the pre-registered data Drv is K and the total number of the registered item data pieces included in the reservation registered data Drv is M. Then, when a predetermined threshold value THD = the ratio (K/M) holds, the commercial is determined to satisfy the needs of the user most. Meanwhile, when THD > (K/M), it is determined that the commercial does not satisfy the needs of the user.

Note that in step S204, it is determined whether or not the commercial satisfies the needs of the user most without specifying the sponsor.

In this way, when the commercial is determined to satisfy the needs of the user most, switch control to the data selector 3 is not carried out, and the control proceeds to step S206 as the commercial is allowed to be aired directly after the program.

Meanwhile, if it is determined that the commercial does not satisfy the needs of the user, the control proceeds to step S300 shown in Fig. 7.

It is determined in step S206 whether or not the commercial distributed following the program is a new commercial.

More specifically, the system controller 11 obtains the name of the sponsor and commercial ID information (such as production number) from the control data CNT included in the attachment data Dtg'. Then, the registered attachment data Dtgs corresponding to the sponsor is searched in the attachment information storage region 9b. When the registered attachment data Dtgs included in the commercial ID information of the commercial being distributed is not detected, the commercial is determined to be new. The control then carries out the processing in step S208 and then proceeds to step S210.

Meanwhile, when the registered attachment data Dtgs including the commercial ID information is detected, it is determined that the commercial has been received at least once (not a new commercial) , and the processing from step S200 continues. More specifically, when the commercial satisfies the needs of the user and is not a new commercial, the commercial is received and shown directly after the program.

When the control proceeds to step S208, the registered commercial data producing portion 6 is instructed to start processing to produce registered commercial data Dcms from the commercial data Dcm being currently received. Then, the registered attachment data producing portion 7 is instructed to start processing to produce registered attachment data Dtgs from the attachment data Dtg', and then the control proceeds to the next step S210.

It is determined in step S210 whether or not the commercial air time is over and a broadcast program is resumed. Here, the system controller 11 determines whether or not the commercial air time is over based on the commercial air time information (such as 15 seconds and 30 seconds) included in the control data CNT. If the commercial air time is still left, the processing in step S210 is repeated, while when the commercial air time is over and the program is resumed, the control proceeds to step S212.

More specifically, when the commercial satisfies the needs of the user and is new (i.e., received for the first time), the commercial is received following the program and shown. Then, the registered commercial data producing portion 6 and the registered attachment data producing portion 7 continue the processing to produce the registered commercial data Dcms and the registered attachment data Dtgs during the air time for the commercial.

When the control proceeds to step S212 after the air time for the commercial is over, the file producing portion 8 produces a registered commercial file Fc in association with the sponsor based on the registered commercial data Dcms and the registered attachment data Dtgs produced by the registered commercial data producing portion 6 and the registered attachment data producing portion 7. Then, the registered commercial file Fc is stored in the storage portion MEM, so that the registered commercial data Dcms, the registered attachment data Dtgs and file management data are stored in the storage regions 9a, 9b, and 9c, respectively, and the processing from step S200 is continued.

In this way, every new received commercial which satisfies the needs of the user is managed on a sponsor-basis, and stored in the storage portion MEM. Therefore, the sponsors have more opportunities to have the users watch their new commercials, while the users have more opportunities to watch new commercials which might interest him/her.

Now, referring to Fig. 7, the operation to follow when it is determined in step S204 that the commercial to be distributed will not satisfy the needs of the user will be described.

In step S300 in Fig. 7, the system controller 11 specifies the name of the sponsor and the air time for the commercial to be distributed from the control data CNT included in the attachment data Dtg'.

Then, it is checked in step S302 whether registered commercial data Dcms whose sponsor and air time are the same as those of the commercial to be distributed is stored in the commercial storage region 9a.

Here, when it is determined that such registered commercial data Dcms having the same air time is stored, the control proceeds to step S304. Meanwhile, when it is determined that there is no such data stored, the control proceeds to step S306.

In step S304, the registered commercial data Dcms having the same air time as that of the commercial to be distributed is selected. When there are a number of registered commercial data pieces Dcms selected, the registered commercial data Dcms with the highest priority is selected and starts to be output from the commercial storage region 9a. Then, the data is supplied to the video/audio signal generating portion 4 through the expansion portion 10 and the data selector 3.

Thus, the commercial satisfying the needs of the user can be shown instead of the commercial being currently received.

While the commercial based on the selected registered commercial data Dcms is shown, the user may turn on the next candidate key 12d, so that the system controller 11 selects the registered commercial data Dcms with the next highest priority to the registered commercial data Dcms of the commercial being shown, and the commercial based on the selected registered commercial data Dcms is shown. When the user further turns on the next candidate key 12d, the system controller 11 selects the registered commercial data Dcms with the next highest priority and shows the commercial based on the selected registered commercial data Dcms.

More specifically, while the commercial satisfying the needs of the user based on the registered commercial data Dcms with the highest priority is shown instead of the commercial being currently received, a commercial by the same sponsor based on registered commercial data Dcms with a lower priority may be shown every time the user turns on the next candidate key 12d.

While the commercial to the taste of the user is shown, the user may turn on the execution key 12e to cause the system controller 11 to re-register the registered commercial data Dcms with a low priority as registered commercial data Dcms with a higher priority.

When the user does not turn on the next candidate key 12d, the system controller 11 maintains the registered priorities at the point.

Moreover, the registered commercial data Dcms by the same sponsor more often selected by the next candidate key 12d and the execution key 12e is provided with the highest priority, so that the priorities (PR) in Fig. 4 can be changed. Stated differently, the number of times each registered commercial data Dcms is selected by the next candidate key 12d and the execution key 12e is added up and stored in the registered data storage region 9d, and the priorities (PR) are re-registered, so that data more often selected is re-registered with a higher priority.

In this way, the user operates the next candidate key 12d and the execution key 12e, so that commercials for the user to see can be exchanged, or commercials more adapted to the needs of the user can be shown more frequently.

It is then determined in the next step S308 whether the air time for the commercial being received is over, and if the air time is still left, the commercial based on the registered commercial data Dcms is shown, while when the air time for the commercial is over, the data selector 3 is instructed to supply contents data Dav being received to the video/audio signal generating portion 4, thereby resuming showing the broadcast program, and the control proceeds to the processing from step S200.

In this way, a commercial is shown based on the registered commercial data Dcms for the air time for the commercial being received, so that the commercial can be prevented from cutting into the air time for the program which follows.

Particularly, when the user does not operate the next candidate key 12d, the user may view the commercial based on the registered commercial data Dcms as if viewing the commercial being currently received.

When the user operates the next candidate key 12d, the commercial based on the registered commercial data Dcms is interrupted based on the air time for the commercial being received. Therefore, the commercial can be prevented from cutting into the air time for the program which follows.

Then, when it is determined in step S302 as described that the registered commercial data having the same air time as that of the commercial to be distributed cannot be detected and the control proceeds to step S306, the registered commercial data Dcms with thehighestprioritybythecorrespondingsponsorisselected. Then, the commercial based on the registered commercial data Dcms is shown. When, for example, a long commercial specially produced for a special program is received, which should be a rare occasion, the registered commercial data Dcms with the highest priority is selected to show the corresponding commercial even if the air time for the selected commercial is different from that particular long commercial.

When the next candidate key 12d is turned on while the commercial based on the registered commercial data Dcms is shown, the system controller 11 switches the commercial to the registered commercial data Dcms with a lower priority by the same sponsor similarly to the case in step S304 to show the commercial. When the execution key 12e is then turned on, the registered commercial data Dcms of the commercial being shown at the point is provided with a higher priority. When the user does not operate the next candidate key 12d, the system controller 11 maintains the priorities registered at that point.

Therefore, the user can set a commercial that he/she desires to watch more often even when the processing in step S304 or S306 goes on.

When it is determined in step S308 that the air time for the commercial being received is over, the data selector 3 is instructed to supply contents data Dav being received to the video/audio generating portion 4. In this way, the broadcast program is resumed and the processing from step S200 in Fig. 6 is executed.

As in the foregoing, the commercial processing apparatus APR according to the embodiment can show a commercial based on registered commercial data Dcms by the sponsor of a commercial being distributed when the commercial distributed does not satisfy the needs of the user. Therefore, the user has more opportunities to watch commercials more to his/her taste.

Meanwhile, the sponsors have more opportunities to have the user watch their commercials, and therefore the commercial distribution effect can be improved.

Particularly, sponsors could not distribute commercials which satisfy the needs of a large number of unspecified users during the same air time by conventional methods. However, when a commercial distributed to the commercial processing apparatus APR does not satisfy the needs of a user, registered commercial data Dcms by the same sponsor stored in the storage portion MEM can be used to show a commercial which satisfies the needs of the user, and therefore the commercials can more efficiently and effectively be distributed.

Moreover, though not shown in the flowcharts in Figs. 5 to 7, when the main power supply of the television receiver is on and the user turns on the editing key 12c provided at the operation portion 12, the system controller 11 causes the display portion 13 to display a list of registered attachment data pieces Dtgs stored in the attachment information storage region 9b and the file management data stored in the file management region 9c. When the user operates the numeric keypad to specify an arbitrary commercial while he/she watches the content displayed at the display portion 13, the system controller 11 causes the registered commercial data Dcms for the specified commercial to be supplied to the video/audio signal generating portion 4 through the expansion portion 10 and the data selector 3. In this way, the video of the specified commercial is reproduced on the monitor screen.

Therefore, the user can watch a desired commercial anytime.

In addition, when the user turns on the editing key 12c, then specifies an arbitrary commercial using the numeric keypad, and turns on the deletion key 12b, the system controller 11 deletes the specified registered commercial data Dcms, the corresponding registered attachment data Dtgs and the file management data. Therefore, the user can delete unnecessary commercials and sort out the commercials.

As the number of registered commercial data pieces Dcms stored in the storage portion MEM increases and the remaining storage space of the storage portion MEM is relatively reduced, the system controller 11 detects and deletes the registered commercial data Dcms with the lowest priority or the oldest such data among the data by each sponsor. In this way, the storage portion MEM can efficiently be used. The registered commercial data Dcms can be deleted based on the validity limit information of the distributed commercials included in the control data CNT, so that the storage portion MEM can more efficiently be used.

Note that in the foregoing description of the embodiment, the commercial processing apparatus APR sets the priorities for the registered commercial data pieces Dcms stored in the storage portion MEM for each sponsor based on how many times each data piece is selected by the next candidate key 12d and the execution key 12e. However, according to the present invention, how to set the priorities is not limited to the method.

As a modification of the embodiment, the commercial processing apparatus APR may set the priorities of the registered commercial data pieces Dcms stored in the storage portion MEM based on information indicating a priority for each distributed commercial included in the control data CNT.

Based on how many times the user selects each commercial data piece by the next candidate key 12d and the execution key 12e, the priorities set beforehand by the sponsor may gradually be changed.

According to the modification, the sponsor can have more opportunities to have the user watch an important commercial for the sponsor with a priority. The user may operate the next candidate key 12d and the execution key 12e to adapt the priorities of the commercials to his/her needs, so that the commercial distribution which reflects the intentions of both the sponsor and user can be carried out.

When it is determined in step S204 (see Fig. 6) whether or not a commercial which satisfies the needs of the user is to be received, the ratio K/M is used as a reference (where K is the number of the matched data pieces among the item data pieces registered by the sponsor and the registration items registered by the user, and M is the total number of the registered item data pieces registered by the user) . The invention is, however, not limited to the method.

More specifically, as another modification of the embodiment, each item set before hand by the sponsor may be weighted and distributed. Meanwhile, each registered item may be weighted based on the taste of the user, and the system controller 11 causes the weighted registered data to be stored in the registered data storage region 9d.

Then, when it is determined whether or not a commercial to satisfy the needs of the user will be received, the system controller 11 refers to the above described registered data, so that heavily weighted items in the matched items among those set beforehand by the sponsor and the user may be determined with higher priorities as to whether they satisfy the needs of the user.

According to the modification, when the sponsor desires a commercial to be watched by women, for example, the weight for the item, sex may be set large, so that more women can have opportunities to watch the commercial. In this way, the commercial distribution effect can be improved.

The commercial distribution surely meeting the needs of both sponsors and users can be carried out.

In the above embodiment, a new commercial which satisfies his/her needs based on registered data Drv pre-registered by the user is determined. Then, the commercial is stored in the form of the registered commercial data Dcms in the storage portion MEM. However, the invention is not limited to this method.

As another modification of the embodiment, while the user watches a commercial being received, in other words, during the air time for the commercial being received, the user gives an instruction to the system controller 11 to store the commercial, registered commercial data Dcms for the suggested commercial may be produced for each sponsor, managed by files and stored in the storage portion MEM.

Referring to Fig. 3, the modification will be described in more detail. When the system controller 11 determines that the screen is switched to a commercial based on the attachment data Dtg', the system controller 11 is sure to cause the registered commercial data producing portion 6 and the registered attachment data producing portion 7 to produce the registered commercial data Dcms and the registered attachment data Dtgs of the commercial being received.

When the user turns on the execution key 12e while the commercial being received is shown, the system controller 11 causes the file producing portion 8 to produce a file Fc. Then, the system controller 11 causes the registered commercial data Dcms, the registered attachment data Dtgs and file management data to be stored in association with the sponsor in the commercial storage region 9a, the attachment information storage region 9b and the file storage region 9c of the storage portion MEM, respectively. Meanwhile, when the user does not turns on the execution key 12e while the commercial being received is shown, the file producing portion 8 does not produce the file Fc, and the registered attachment data Dtgs and the file management data are not stored in the commercial storage region 9a and the attachment information storage region 9b.

According to the modification, the user can instinctively determine a commercial which meets his/her taste while he/she actually watches the commercial, and has the commercial stored as a new commercial. This improves the operability.

As another modification, when the system controller 11 determines that the commercial being distributed does not satisfy the needs of the user, the system controller 11 causes a plurality of registered commercial data pieces Dcms by the sponsor of the commercial to be output from the commercial storage region 9a. Then, the data pieces are supplied to the video/audio signal generating portion 4 through the expansion portion 10 and the data selector 3, and a plurality of corresponding commercials may be shown at the same time by a so-called multi-angle display method.

More specifically, in steps S304 and S306 in Fig. 7 described above, commercial showing is based on the registered commercial data Dcms with the highest priority among the plurality of registered commercial data pieces Dcms by the sponsor-of the commercial being distributed. Meanwhile, when the plurality of registered commercial data pieces Dcms by the sponsor are stored in the commercial storage region 9a, a prescribed number of registered commercial data pieces Dcms with the highest priorities, for example, may be supplied to the video/audio signal generating portion 4. In this way, the commercials may be shown by the multi-angle display method.

According to the modification, the user may have more opportunities to watch a plurality of commercials which may interest him/her. Meanwhile, the sponsor may have more opportunities to show a plurality of distributed commercials to more users. Therefore, the commercial distribution effect can be improved.

As another modification, the above-described commercial processing apparatus APR may include a communication unit such as a modem which can be connected with a communication network such as the Internet. In this way, the system controller 11 may transmit data stored in the attachment information storage region 9b and the file management region 9c through this communication network to the servers of the sponsor.

According to the modification, when a sponsor distributes a commercial, the e-mail address or URL data of the sponsor is included in the control data CNT. The commercial processing apparatus APR causes the registered attachment data Dtgs including the e-mail address and the URL data of the sponsor to be stored in the attachment information storage region 9b.

When the system controller 11 transmits the data stored in the attachment information storage region 9b and the file management region 9c to the sponsor side through the-communication network, the data specific to each sponsor stored in the attachment information storage region 9b and the file management region 9c is transmitted according to the e-mail address and URL specific to the sponsor.

According to the modification, each sponsor can obtain information related to how commercials distributed by the sponsor are viewed/listened to, and therefore materials necessary for producing commercials which satisfy the needs of users can be obtained. Only the information, for example, related to how distributed commercials by each sponsor are viewed/listened to is transmitted from the commercial processing apparatus APR to the sponsor. Therefore, such information is not known to other sponsors by mistake, in other words, useful information can safely be obtained.

As another modification, standardized item data pre-stored in the registered data storage region 9d may be distributed to the commercial processing apparatus APR through the Internet as described, may be downloaded to the commercial processing apparatus APR and then may be stored in the registered data storage region 9d.

There may be a reproducing apparatus which reproduces a CD or DVD in the commercial processing apparatus APR. Then, the standardized item data recorded on a CD or DVD may be distributed as a supplement to a magazine and supplied to the user. The user may reproduce the CD or DVD using the reproducing apparatus to install the standardized item data in the registered data storage region 9d.

In the commercial processing apparatus APR described above, the microprocessor (MPU) included in the system controller 11 carries out pre-set prescribed computer programs, thereby controlling the commercial showing.

The invention is, however, not limited to this method. The computer program used to process commercials may be an independent commercial processing program, and distributed to a television receiver having a communication function through a communication network such as the Internet. In this way, the program may be downloaded into the system controller 11 or a storage medium such as a CD or DVD recorded with the commercial processing program may be provided to the user. Then, the television receiver including a reproducing apparatus which reproduces the information recorded on the storage medium may receive the storage medium so that the program may be installed into the system controller 11.

The commercial processing program may also be executed by a personal computer.

In this way, when the commercial processing program is provided through the Internet or the storage medium, a personal computer (PC) including a so-called video capture board having a receiving tuner which can receive television or radio broadcasting can show the commercial processing program as described above. More effective commercial distribution environments can be provided to a large number of sponsors and users.

The commercial processing apparatus APR shown in Fig. 3 is provided inside a television receiver, while the present invention is not limited to the configuration. The commercial processing apparatus APR may be provided as a separate or independent apparatus from the television receiver.

As in the foregoing, by the commercial distribution system, the commercial processing apparatus, the commercial processing method, and the commercial processing program according to the present invention, when a commercial distributed from a distribution source to a large number of unspecified users satisfies the needs of a user, the commercial is shown and stored in storage means. When the commercial does not satisfy the needs of the user, a registered commercial already stored in the storage means which satisfies the needs of the user is shown instead, so that the sponsor can provide commercials which satisfy the needs of the user more often. Meanwhile, the user may have more opportunities to watch commercials which satisfy his/her needs.

The registered commercial by the sponsor of the commercial being distributed is shown, which can never be disadvantageous to the sponsor, while the commercial distribution effect can be improved.

A registered commercial with a high priority set beforehand by a user or by a sponsor is shown, so that a commercial which satisfies the user's needs more can be provided, and as a result, the commercial distribution effect can be improved as the sponsor expects.

The information indicating how commercials by each sponsor are viewed/listened to is transmitted to the sponsor. Therefore, useful information in producing commercials in the future can be provided to each sponsor.

## Claims

1. A commercial distribution system(SYS), having a distribution source(Bi) for distributing a commercial(CMA) to a large number of unspecified users, and a commercial processing apparatus(APR) for showing the commercial received from said distribution source,
said distribution source distributing attachment information (ATR) indicating a user as a distribution target together with the commercial,
said commercial processing apparatus(APR) comprising:
determining means(11) for comparing the attachment information(ATR) distributed together with said commercial(Dcm) and registered information(Drv) indicating needs set beforehand by a user, and for determining whether or not the commercial satisfies said user's needs based on how much said attachment information and said registered information agree with each other; and
control means (11) for showing a commercial being distributed and having the commercial stored in storage means (MEM) as a registered commercial (Dcms) in response to the determination by said determining means that the commercial satisfies said user's needs, while showing the registered commercial(Dcms) already stored in said storage means instead of the commercial(Dcm) being distributed in response to the determination by said determining means that the commercial does not satisfy said user's needs.

2. The commercial distribution system according to claim 1, wherein
said control means(11) has the registered commercial(Dcms) stored in said storage means in association with the sponsor of the commercial(Dcm) being distributed, and
when the registered commercial(Dcms) already stored in said storage means is shown, the registered commercial by the sponsor of the commercial being distributed is shown.

3. The commercial distribution system according to claim 2,
when the registered commercial already stored in said storage means is shown, a registered commercial with a high priority(PR) set beforehand in response to an instruction from said user is shown.

4. The commercial distribution system according to claim 2, wherein
when the registered commercial already stored in said storage means is shown, a registered commercial with a high priority set beforehand by said sponsor is shown.

5. The commercial distribution system according to claim 3 or 4, further comprising:
communication means for transmitting information indicating how the registered commercial for each sponsor stored in said storage means is viewed/listened to for the sponsor through a communication network.

6. A commercial processing apparatus (APR) for showing a commercial (CMA) distributed to a large number of unspecified users received from a distribution source(Bi), comprising:
determining means(11) for comparing attachment information(ATR) distributed together with said commercial(Dcm) from said distribution source indicating a user as a distribution target and registered information(Drv) indicating needs set beforehand by a user, and for determining whether or not said commercial satisfies said user's needs based on how much said attachment information(ATR) and said registered information(Drv) agree with each other; and
control means(11) for showing the commercial(Dcm) being distributed and having the commercial stored in storage means(MEM) as a registered commercial(Dcms) in response to the determination by said determining means that the commercial satisfies said user's needs, while showing a registered commercial(Dcms) already stored in said storage means instead of the commercial being distributed in response to the determination by said determining means that the commercial does not satisfy the user's needs.

7. The commercial processing apparatus according to claim 6, wherein
said control means(11) has the registered commercial(Dcms) stored in said storage means in association with the sponsor of the commercial(Dcm) being distributed, and when the registered commercial(Dcms) already stored in said storage means is shown, the registered commercial by the sponsor of the commercial being distributed is shown.

8. The commercial processing apparatus according to claim 7, wherein
when the registered commercial already stored in said storage means is shown, a registered commercial with a high priority(PR) set based on an instruction from said user is shown.

9. The commercial processing apparatus according to claim 7, wherein
when the registered commercial already stored in said storage means is shown, a registered commercial with a high priority set beforehand by said sponsor is shown.

10. The commercial processing apparatus according to claim 8 or 9, further comprising communication means for transmitting information to each sponsor through a communication network, said information indicating how the registered commercial stored in said storage means for the sponsor is viewed/listened to.

11. A method of processing a commercial for distributing the commercial (CMA) from a distribution source(Bi) to a large number of unspecified users, and for showing the commercial according to needs of each user, comprising the steps of:
comparing(S204) attachment information(ATR) distributed together with said commercial(Dcm) from said distribution source indicating a user as a distribution target and registered information(Drv) indicating needs set(S100-S104) beforehand by a user;
determining (S204) whether or not said commercial satisfies said user's needs based on how much said attachment information and said registered information agree with each other; and
showing(5204) the commercial being distributed and having (S208) the commercial stored in storage means as a registered commercial in response to the determination that the commercial satisfies said user's needs, while showing (S304,S306) a registered commercial already stored in said storage means instead of the commercial being distributed in response to the determination that the commercial does not satisfy the user's needs.

12. The commercial processing method according to claim 11, wherein
said registered commercial is stored in association with the sponsor of the commercial being distributed, and when a registered commercial already stored in said storage means is shown, the registered commercial by the sponsor of the commercial being distributed is shown.

13. The commercial processing method according to claim 12, wherein
when the registered commercial already stored in said storage means is shown, a registered commercial with a high priority set based on an instruction from said user is shown.

14. The commercial processing method according to claim 12, wherein
when the registered commercial stored in said storage means is shown, a registered commercial with a high priority set beforehand by said sponsor is shown.

15. The commercial processing method according to claim 13 or 14, further comprising the steps of:
transmitting information to each sponsor through a communication network, said information indicating how the registered commercial stored in said storage means for the sponsor is viewed/listened to.

16. A computer readable storage medium having a commercial processing program for controlling a computer to show a commercial(CMA) distributed from a distribution source(Bi) to a large number of unspecified users as a target according to needs of each user, said program comprising the steps of:
comparing(5204) attachment information(ATR) distributed together with said commercial(Dcm) from said distribution source indicating a user as a distribution target and registered information(Drv) indicating needs set (S100-S104) beforehand by a user;
determining(S204) whether or not the commercial satisfies said user's needs based on how much said attachment information and said registered information agree with each other; and
showing(S204) the commercial being distributed and having(S208) the commercial stored in storage means as a registered commercial in response to the determination that the commercial satisfies said user's needs, while showing(S304,S306) a registered commercial already stored in said storage means instead of the commercial being distributed in response to the determination that the commercial does not satisfy the user's needs.

17. The computer readable storage medium according to claim 16, wherein
in the control step of storing said registered commercial, said registered commercial is stored in association with the sponsor of the commercial being distributed, and when the registered commercial already stored in said storage means is shown, the registered commercial by the sponsor of the commercial being distributed is shown.

18. The computer readable storage medium according to claim 17, wherein
in the control step of showing a registered commercial already stored in said storage means, a registered commercial with a high priority set based on an instruction from said user is shown.

19. The computer readable storage medium according to 17, wherein
in the control step of showing a registered commercial already stored in said storage means, a registered commercial with a high priority set beforehand by said sponsor is shown.

20. The computer readable storage medium according to claim 18 or 19, further comprising a communication step of transmitting information to each sponsor through a communication network, said information indicating how the registered commercial stored in said storage means for the sponsor is viewed/listened to.
